# EUROPÄISCHE PATENTSCHRIFT

(11) **EP 1 289 704 B1**
(45) Veröffentlichungstag und Bekanntmachung des Hinweises auf die Patenterteilung: **28.07.2004**
(21) Anmeldenummer: 01984011.5
(22) Anmeldetag: 07.06.2001
(51) Int. Cl.: B23D 45/02, B28D 1/18

(54) **ANTRIEBSEINHEIT FÜR EINE SPANABHEBENDE BEARBEITUNGSMASCHINE**
DRIVE UNIT FOR A CHIP-REMOVING TOOL MACHINE
UNITE D'ENTRAINEMENT POUR UNE MACHINE D'USINAGE A ENLEVEMENT DE COPEAUX

(30) Priorität: 14.06.2000 DE 20010531 U
(43) Veröffentlichungstag der Anmeldung: 12.03.2003
(73) Patentinhaber: Steiner, Andreas, 5310 Tiefengraben (AT); Brehm, Bernhard, 75365 Calw/Stammheim (DE)
(72) Erfinder: Steiner, Andreas, 5310 Tiefengraben (AT); Brehm, Bernhard, 75365 Calw/Stammheim (DE)
(74) Vertreter: Ernicke, Klaus Stefan
(86) Internationale Anmeldenummer: PCT/EP2001/006488
(87) Internationale Veröffentlichungsnummer: WO 2001/096056

(56) Entgegenhaltungen:
- DE-A- 19 511 721
- US-A- 1 808 453
- US-A- 2 736 311
- US-A- 3 722 497
- US-A- 4 836 494
- US-A- 4 979 412

## Beschreibung

Die Erfindung betrifft eine Antriebseinheit für eine spanabhebende Bearbeitungsmaschine, insbesondere eine Säge-, Trenn- oder Schleifmaschine für die Bearbeitung von Beton, Stein, Holz oder Metall mit den Merkmalen im Oberbegriff des Hauptanspruches.

Aus der US-A-3,722,497 ist eine solche Antriebseinheit für eine spanabhebende Bearbeitungsmaschine in Form einer Schlitzsäge bekannt. Die Antriebseinheit kann mittels einer Führungsschiene mit einer Zahnstange an der Mauer befestigt werden. Die Antriebseinheit besitzt einen Werkzeugantrieb und eine Bewegungseinheit, welche einen abtriebsseitigen Schwenkarm und einen mit der Führungsschiene verbundenen Fahrschlitten aufweist. Der mit einem Elektromotor ausgerüstete Werkzeugantrieb befindet sich am Fahrschlitten und treibt über ein im Schwenkarm angeordnetes Getriebe ein am Schwenkarm montiertes kreisrundes Sägeblatt an. Für die Verstellung des Schwenkarms und des Fahrschlittens sind manuell betätigte Stellantriebe mit Kurbelzapfen vorhanden, auf welche eine Handkurbel bei der Betätigung lösbar aufgesteckt werden kann. Bei dieser Ausbildung müssen die Antriebskräfte vom Antriebsmotor am Fahrschlitten über den Schwenkarm hinweg zum distanziert angeordneten Sägeblatt übertragen werden. Dies erfordert einen hohen Bau- und Platzaufwand, wobei sich auch kinematische Probleme ergeben, wenn der Schwenkarm während des laufenden Werkzeugantriebs verstellt wird.

Die US-A-4,979,412 zeigt eine andere Sägemaschine mit einer Antriebseinheit. Für das rotierende Sägeblatt ist hierbei ein hydraulischer Antrieb vorgesehen. Die Antriebseinheit besitzt eine Bewegungseinheit mit einem Schwenkarm und einem Fahrschlitten. Im Schwenkarm sind Fluidkanäle und ein mit Zahnrädern ausgerüsteter Hydraulikmotor für den Antrieb des Sägeblatts vorhanden. Die Zufuhr des Hydrauliköls erfolgt vom Fahrschlitten aus über dortige Hydraulikanschlüsse und Hohlwellen mit getrennten Hydraulikkanälen für Zufuhr und Rückleitung des Hydrauliköls, welche mit den ebenfalls getrennten Kanälen im Schwenkarm in Verbindung stehen. Die Verstellung des Schwenkarms und des Fahrschlittens erfolgt hier ebenfalls manuell über einen Schneckentrieb mit einer Handkurbel. Außerdem wird noch eine Schutzhülle für das Sägeblatt bei den Schwenkarmverstellungen mitbewegt.

Ein anderes Mauerschlitzgerät mit Antriebseinheit ist aus der DE 195 11 721 A1 bekannt. Die Antriebseinheit besteht aus einem Elektromotor für ein rotierend angetriebenes Trennblatt, die beide in einem großvolumigen Gehäuse untergebracht sind, welches schwenkbar und verriegelbar an einem Fahrschlitten angebracht ist. Am Gehäuse befinden sich zwei Handgriffe mit Schaltelementen, mit denen einerseits der Werkzeugantrieb geschaltet und andererseits die Verriegelung für die Schwenkstellung betätigt wird. Die Schwenkverstellung und die Fahrbewegung des Mauerschlitzgerätes werden von Hand mittels der beiden Handgriffe ausgeführt. Der Fahrschlitten wird mittels Rollen direkt auf dem zu bearbeitenden Untergrund bewegt.

Ähnliche Schlitzgeräte mit einem motorischen Antrieb nur für das Werkzeug und einer ansonsten manuellen Betätigung sind auch der US-A-2,736,311 und der US-A-4,836,494 bekannt.

Die Erfindung hat zur Aufgabe, eine bessere Antriebseinheit aufzuzeigen.

Die Erfindung löst diese Aufgabe mit den Merkmalen im Hauptanspruch.
Bei der beanspruchten Antriebseinheit ist der elektromotorische Werkzeugantrieb im Schwenkarm angeordnet. Hierdurch kann der Werkzeugantrieb bei den Drehbewegungen des Schwenkarmes mitbewegt werden. Aufwendige Umlenkgetriebe können entfallen. Außerdem werden die Antriebsverluste verringert. Durch die werkzeugnahe Anordnung des Werkzeugantriebs ist auch die Kraftübertragung sehr viel direkter und mit weniger Toleranzproblemen, unerwünschten Federeigenschaften, etc. belastet. Außerdem ist der Bauaufwand geringer, wobei insbesondere die Baugröße der Antriebseinheit verkleinert werden kann.

In der bevorzugten Ausführungsform ist die Antriebseinheit als austauschbares und für unterschiedliche Bearbeitungsmaschinen einsetzbares Antriebsmodul ausgebildet. Die Bearbeitungsmaschinen können hierdurch vereinfacht und verbilligt werden. Außerdem kann durch die Trennbarkeit und Zerlegbarkeit Gewicht gespart werden. Das Handling und die Wartung werden ebenfalls vereinfacht. Das Antriebsmodul lässt sich dadurch an unterschiedlichen Bearbeitungsmaschinen einsetzen. Besondere Vorteile ergeben sich im Bereich von Sägen, Trenn- oder Schleifmaschinen für die Bearbeitung von Beton oder Stein. Die hierfür eingesetzten Werkzeuge können völlig unterschiedlicher Natur sein. Mit dem Antriebsmodul lässt sich sowohl eine Seilsäge, wie auch eine Scheibensäge oder Trennsäge betreiben. Eine geeignete normierte Werkzeugaufnahme, vorzugsweise in Form einer standardisierten Wechselkupplung, sorgt für den einfachen Werkzeugwechsel.

Die Antriebseinheit kann alternativ auch in die Bearbeitungsmaschine fest integriert sein. In der einfachsten Ausführungsform besteht sie aus dem Werkzeugantrieb, der mehrachsigen Bewegungseinheit und Stellantrieben. Für die Bewegungseinheit kann eine geeignete Führung, insbesondere eine lineare Führungsschiene vorhanden sein. Diese Führung kann auch Bestandteil der Antriebseinheit und insbesondere des austauschbaren Antriebsmoduls sein. Mit einer geeigneten kurzen Basislänge und geeigneten Anschlussmöglichkeiten mit Lagerbock und Aufnahme kann eine entsprechend standardisierte Führung dann eine normierte Anschlussmöglichkeiten an die verschiedenen Grundkomponenten der Bearbeitungsmaschinen bieten. Über ein oder mehrere geeignete Fixiereinrichtungen, insbesondere Klemmeinrichtungen, kann dann die Bewegungseinheit je nach Aufgabenbereich an der Bearbeitungsmaschine auch stillgesetzt und arretiert werden. Die Antriebseinheit bzw. das Antriebsmodul können dann als stationärer Antrieb fungieren.

Die Antriebseinheit kann eine integrierte Kühleinrichtung aufweisen, die mit fluidischen Kühlmitteln, wie Wasser, aber auch Bohr- oder Schneidflüssigkeiten oder speziellen Kühlflüssigkeiten betrieben wird. Durch diese Kühlung, die vorzugsweise sowohl einen offenen und zum Werkzeug weitergeführten Kühlkreislauf, wie auch einen geschlossenen Kühlkreislauf hat, können die Antriebsaggregate trotz ihrer Kapselung im Gehäuse und ihrer kleinen Bauweise optimal gekühlt werden. Hierfür ist es günstig, wenn die Kühlleitungen in der Art eines Kühlkäfigs um die Motoren und die Getriebe herumgeführt sind.

In den Unteransprüchen sind weitere vorteilhafte Ausgestaltungen der Erfindung angegeben.

Die Erfindung ist in den Zeichnungen beispielsweise und schematisch dargestellt: Im einzelnen zeigen:
- Figur 1:: eine teilweise abgebrochene spanabhebende Bearbeitungsmaschine mit einer Antriebseinheit in einer teilweise aufgebrochenen Explosionsdarstellung,
- Figur 2 bis 5:: verschiedene Ansichten der Bearbeitungsmaschine von Figur 1,
- Figur 6 und 7:: eine Variante der Bearbeitungsmaschine als Seilsäge in Seitenansicht und Stirnansicht gemäß Pfeil VII und
- Figur 8:: eine perspektivische Ansicht der Antriebseinheit mit einer integrierten Kühleinrichtung.

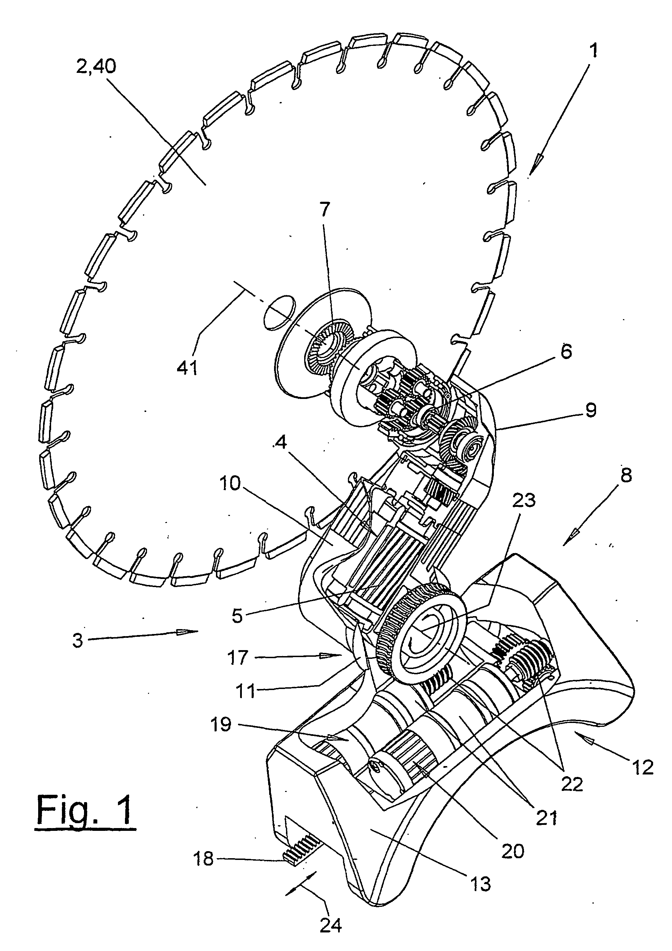

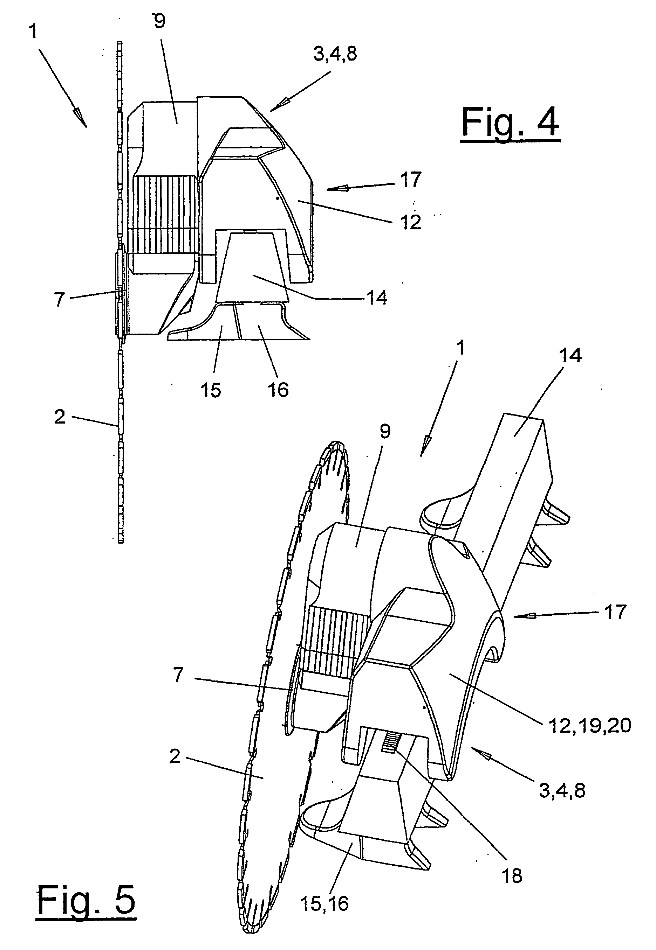

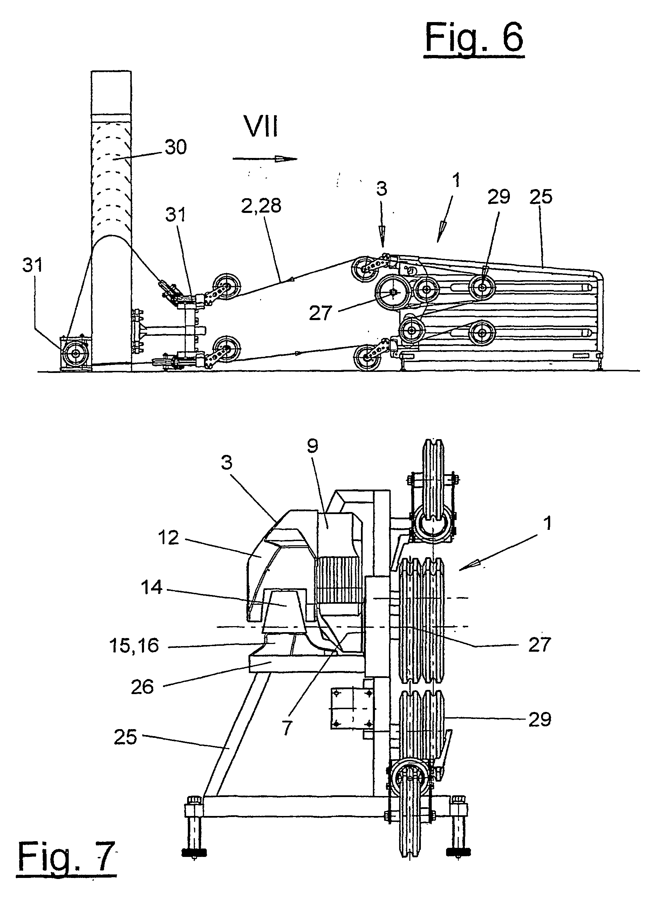

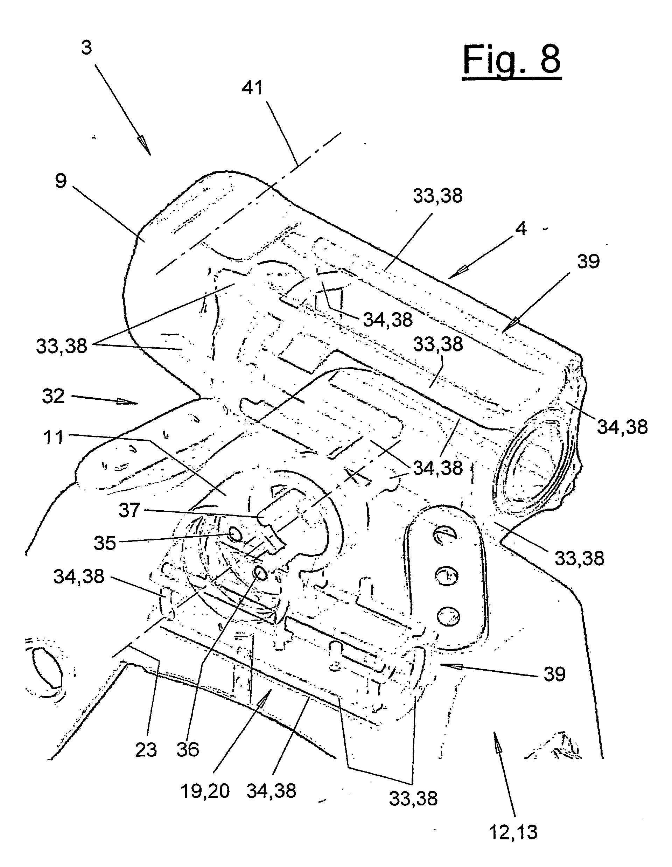

In-den Zeichnungen ist eine spanabhebende Bearbeitungsmaschine (1) dargestellt, die im Ausführungsbeispiel von Figur 1 bis 5 als Scheiben- oder Trennsäge und im Ausführungsbeispiel von Figur 6 und 7 als Seilsäge ausgebildet ist.

Bei der Ausführung als Trennsäge besteht das Werkzeug (2) aus einem rotierenden scheibenförmigen Sägeblatt (40). Bei der Seilsäge ist das Werkzeug (2) als umlaufendes endloses Sägeseil (28) ausgebildet. In anderen, nicht dargestellten Varianten kann das Werkzeug (2) eine beliebige andere Form haben und z.B. als Schleifwerkzeug, Schneid- oder Trennwerkzeug ausgebildet sein.

Die Bearbeitungsmaschine (1) ist vorzugsweise als spanabhebende Maschine ausgestaltet, wobei sie mit dem Werkzeug (2) das bearbeitete Material abträgt. Ein bevorzugter Einsatzbereich der Bearbeitungsmaschine (1) liegt bei der Bearbeitung von Beton, Stein, Marmor, Keramik oder dgl. steinernen Materialien. Aber auch andere Werkstoffe, wie Metall, Holz oder Kunststoff lassen sich bearbeiten.

Die Bearbeitungsmaschine (1) besitzt eine Antriebseinheit (3) für den Antrieb und die Bewegungen des Werkzeugs (2). Diese Antriebseinheit (3) kann wahlweise als fester Bestandteil in die Bearbeitungsmaschine (1) integriert sein'oder als austauschbares Antriebsmodul gestaltet sein.

Die Antriebseinheit (3) umfasst einen Werkzeugantrieb (4) und eine mehrachsige motorisch angetriebene Bewegungseinheit (8). Die Bewegungseinheit (8) besteht aus einem Schwenkarm (9), an dem das Werkzeug (2) über eine geeignete Werkzeugaufnahme (7), vorzugsweise eine standardisierte Schnellwechselkupplung für unterschiedliche Werkzeuge lösbar befestigt ist. Die Bewegungseinheit (8) umfasst ferner noch eine Basiseinheit (12), die im gezeigten Ausführungsbeispiel als lineare Fahreinheit gestaltet ist.

In der gezeigten Ausführungsform hat die Bewegungseinheit (8) zwei Bewegungsachsen (23,24), nämlich die Drehachse (23) des Schwenkarms (9) und die lineare Fahrachse (24) der Fahreinheit (12). Die Drehachse (23) ist vorzugsweise quer zur Fahrachse (24) ausgerichtet. Hierdurch kann z.B. eine Steinsäge Fugen beliebiger Länge-und Tiefe schneiden, wobei die Fugentiefe durch den Drehwinkel des Schwenkarms (9) und die Fugenlänge durch den Verfahrweg der Fahreinheit (12) bestimmt ist.

In anderen abgewandelten Ausführungsformen kann die Bewegungseinheit (8) weitere oder andere Bewegungsachsen besitzen, wobei die Basiseinheit ihrerseits auch aus mehreren Teilen mit entsprechend mehreren Bewegungsachsen bestehen kann. Hierbei kann z.B. die Basiseinheit (12) auch als ein- oder mehrteilige Schwenkeinheit gestaltet sein, wobei die zweite Bewegungsachse (24) ebenfalls eine Drehachse ist.

Der Werkzeugantrieb (4), der das Werkzeug (2) um eine Werkzeugdrehachse (41) in drehende oder umlaufene Bewegung oder in eine beliebige andere Art von Bewegung versetzt, ist im Bereich des Schwenkarmes (9) angeordnet. In der gezeigten Ausführungsform ist der Werkzeugantrieb (4) im Inneren des Schwenkarmgehäuses (10) zwischen dessen Drehachse (23) und der Werkzeugdrehachse (41) angeordnet. Hierfür ist eine integrierte Lagerung in dem rundum geschlossenen Gehäuse (13) vorgesehen.

In einer anderen, nicht dargestellten Variante kann der Werkzeugantrieb (4) auch an anderer Stelle am Schwenkarm (9) und z.B. an dessen Außenseite angeordnet sein. Der Schwenkarm (9) kann hierzu auch eine beliebig geeignete Querschnittsgestaltung, z.B. ein teilweise offenes Gehäuse oder eine einfache Stangenform aufweisen. Die gezeigte integrierte Lagerung in dem hohlen Gehäuse (10) hat den Vorteil, dass sie den Werkzeugantrieb (4) schützend an allen Seiten umgibt.

Der Werkzeugantrieb (4) besteht aus einem elektrischen Antriebsmotor (5) und einem mehrstufigen Getriebe (6). In der gezeigten Ausführungsform ist das Getriebe als Winkelgetriebe ausgebildet, dessen Abtriebsachse bzw. Werkzeugdrehachse (41) sich quer zur Längsachse des Schwenkarmes (9) erstreckt. Hierdurch kann das längs der Fahrachse (24) ausgerichtete Werkzeug (2) entlang der Fahrachse (24) bewegt und außerdem in einer ebenfalls längs der Fahrachse (24) gerichteten Ebene auf und ab geschwenkt werden. Diese Anordnung kann auch anders gewählt werden, wobei z.B. die Abtriebsachse gleichachsig zum Schwenkarm (9) verläuft.

Der elektrische Antriebsmotor und das integrierte Getriebe (6) sind vorzugsweise entsprechend des DE-G 298 06 147 ausgebildet und haben eine hohe Leistungsfähigkeit bei einem kleinen Platzbedarf. Alternativ kann der Werkzeugantrieb (4) aber auch in beliebig anderer Weise ausgebildet sein. Statt eines Elektromotors können hier aber auch andere Motorarten verwendet werden. Auf ein Getriebe (6) kann unter Umständen dabei verzichtet werden.

Die Basiseinheit'(12) oder Fahreinheit besteht aus einem Gehäuse (13), welches die Stellantriebe (19,20) für die Bewegungsachsen (23,24) und die Schwenkbewegung des Schwenkarmes sowie die Fahrbewegung der Basiseinheit (12) aufnimmt. Figur 1 zeigt in der aufgebrochenen Explosionsdarstellung diese Teile. In der gezeigten Ausführungsform bewegt der Stellantrieb (19) den Schwenkarm (9) und der Stellantrieb (20) bewegt die Basiseinheit (12).

Die Stellantriebe (19,20) bestehen jeweils aus einem Stellmotor (21), vorzugsweise einem Elektromotor, und aus einem Getriebe (22), z.B. einem Schneckengetriebe. Für die Fahrbewegung der Basiseinheit (12) ist eine Führung (14), z.B. eine Führungsschiene vorgesehen, auf der ein geeignetes Abtriebsmittel (18), z.B. eine Zahnstange für den Eingriff des Abtriebsrades des Stellantriebes (20) vorgesehen ist. Der Stellantrieb (19) dreht über seine Schneckenwelle ein Schneckenrad am Schwenkarm (9). Der Schwenkarm (9) ist hierzu in geeigneter Weise über ein hohles Schwenklager (11) mit der Basiseinheit (12) verbunden, wobei das Schneckenrad außenseitig das Lager (11) umgibt.

In Abwandlung der gezeigten Ausführungsform kann der Stellantrieb für den Schwenkarm (9) bei entsprechenden Platzverhältnissen auch im oder am Schwenkarm (9) untergebracht sein. Bei einer mehrteiligen Basiseinheit können auch entsprechend mehrere Stellantriebe (19,20) vorhanden sein, die dann auch entsprechend anders ausgebildet und angeordnet sein können.

Die Basiseinheit (12) ist mit der Führung (14) über eine geeignete Gleit- oder Rolllagerung verbunden. Hierfür gibt es ebenfalls unterschiedlichste konstruktive Möglichkeiten. Vorzugsweise ist eine umfassende formschlüssige Führung vorhanden, die eine Beweglichkeit der Basiseihheit (12) nur in der Fahrachse (24) zulässt.

Die Führungsschiene (14) besitzt ein oder mehrere Lagerböcke (15) oder andere Anschlussmöglichkeiten, mit denen sie an der Bearbeitungsmaschine (1) befestigt werden kann. Alternativ kann die Führung (14) auch in das Maschinengestell der Bearbeitungsmaschine (1) integriert sein. Die Führung (14) kann auch an anderer Stelle extern, z.B. an einem Werkstück befestigt sein..Bei den Lagerböcken (15) sind vorzugsweise geeignete Aufnahmen (16) für eine lösbare Befestigung und für einen Austausch vorhanden.

In der bevorzugten Ausführungsform ist die Antriebseinheit (3) als austauschbares Antriebsmodul ausgebildet. Sie beinhaltet die Führung (14) und wird mitsamt dieser Führung (14) gewechselt. Eine lösbare Befestigung ist dabei über die Lagerböcke (15) und die Aufnahmen (16) möglich. In diesem Fall empfiehlt es sich, die Führungsschiene (14) mit einer kurzen Standardlänge zu versehen und hierdurch als eine Art Gestell öder Stützlagerung der Antriebseinheit (3) zu verwenden. Die kurze Basisschiene kann mit weiteren Schienenteilen einoder beidseitig je nach Bedarf verlängert werden, wobei diese Verlängerungsteile z.B. am Maschinengestell der Bearbeitungsmaschine (1) angeordnet sind. Hierfür sind dann auch entsprechenden stirnseitige Schienenanschlüsse zur Herstellung einer durchgehenden langen Führungsschiene vorhanden.

Die Bewegungseinheit (8) hat vorzugsweise ein oder mehrere nicht näher dargestellte Fixiereinrichtungen (17), mit denen die Bewegungsachsen (23,24) fixiert werden können. Beispielsweise sind dies Klemmeinrichtungen am Lager (11) und am Gehäuse (13) bzw. an der Führung (14). Mittels der Fixiereinrichtungen (17) kann die Bewegungseinheit (8) arretiert werden, so dass die Antriebseinheit (3) bzw. das Antriebsmodul als stationärer Antrieb fungieren kann.

Bei der in Figur 1 bis 5 gezeigten Blattsäge oder Trennsäge kann die Bearbeitungsmaschine (1) als stationäre oder Standmaschine ausgebildet sein. Die Zustellbewegung für das Sägeblatt (40) und die Schnitttiefe ergeben sich der Drehachse (23). Die Blatt- oder Trennsäge aus kann aber auch als Fugenschneider ausgebildet sein, wobei der Fahrweg sich über die lineare Bewegungsachse (24) der Bewegungseinheit (8) in Verbindung mit einer entsprechend langen Führung (14) ergibt. Die Führung (14) kann am Maschinengestell der Bearbeitungsmaschine (1) oder am Werkstück befestigt sein. Alternativ kann die Säge (1) als Fugenschneider für längere Fahrwege auch auf einem Fahrzeug angeordnet sein. Die Antriebseinheit (3) wird dabei mit einer kurzen Führungsschiene (14) und mit blockierter Fahreinheit (12) bzw. Fahrachse (24) auf dem Fahrzeug befestigt.

Bei der in Figur 6 und 7 gezeigten Seilsäge wird die Antriebseinheit (3) bzw. das Antriebsmodul am Maschinengestell (25) auf einem geeigneten Sockel (26) oder einer sonstigen Aufnahme befestigt. Bei der Seilsäge (1) kommt die Antriebseinheit (3) als stationärer Antrieb mit blockierten Fixiereinrichtungen (17) für beide Bewegungsachsen (23,24) zum Einsatz. Der Schwenkarm (9) mit dem Werkzeugantrieb (4) wird über die Werkzeugaufnahme (7) bzw. Schnellwechselkupplung an die Antriebsrolle (27) angeschlossen. Hierbei kann unter Umständen ein Untersetzungsgetriebe zwischengeschaltet sein. Das Sägeseil (28) wird am Maschinengestell (25) über eine . Seilführung (29) mit mehreren stationären und beweglichen Umlenkrollen und einem verfahrbaren Seilspeicher geführt und über die Antriebsrolle (27) umlaufend angetrieben.

Mit der Seilsäge (1) werden Trennschnitte in Wänden (30) geführt, wobei das mit abrasiven Teilchen besetzte Sägeseil (28) über ein oder mehrere Umlenkvorrichtungen (31) in die erforderlichen Winkellagen gebracht werden kann. Die Seilsäge kann abgesehen von der Antriebseinheit (3) beliebig ausgebildet sein. Vorzugsweise ist sie entsprechend des DE-G 298 21 386 gestaltet.

Die Antriebseinheit (3) hat in der bevorzugten Ausführungsform eine integrierte Kühleinrichtung (32), die mit geeigneten flüssigen Kühlmitteln betrieben wird. Die Kühlmittel können im einfachsten Fall Wasser sein. Sie können aber auch aus speziellen im Kreislauf geführten Kühlmitteln bestehen. In weiterer Abwandlung kann das Kühlmittel auch als Schneidmittel oder Spülmittel für das Werkzeug (2) ausgeführt sein.

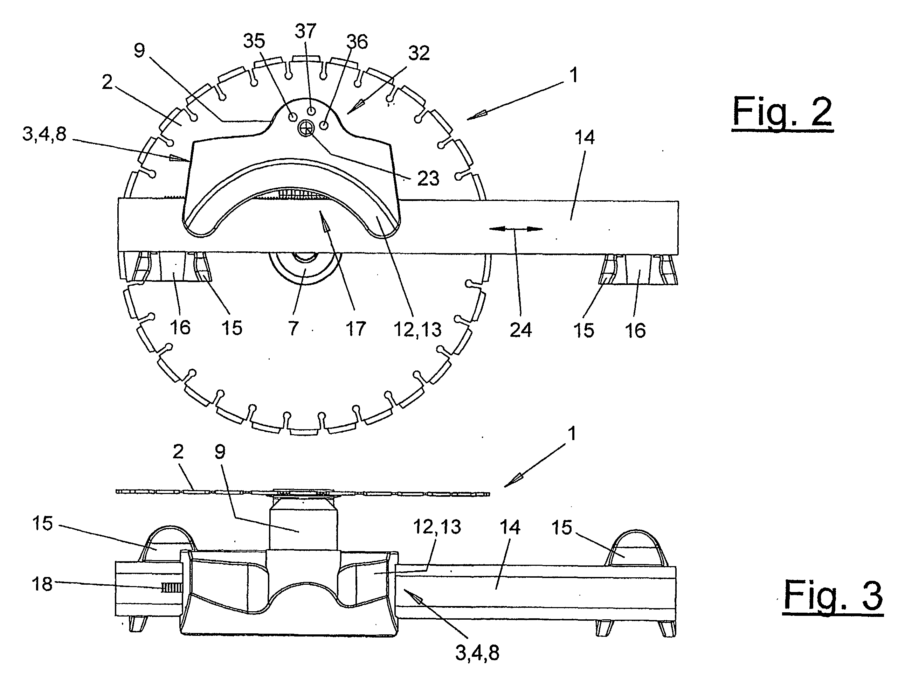

Figur 8 zeigt die Kühleinrichtung (32) im Detail. In Figur 2 sind Teile hiervon in der Seitenansicht dargestellt.

Die Kühleinrichtung (32) hat einen offenen Kühlkreislauf (33), der zum Werkzeug (2) geführt ist und dort austritt. In diesem Fall ist die Kühlflüssigkeit als geeignetes Schneid- oder Spülmittel für das Werkzeug (2) ausgebildet. Der offene Kühlkreislauf (33) hat einen am Gehäuse (13) der Basiseinheit (12) angeordneten Zulauf (35), an den in geeigneter Weise Versorgungsschläuche angeschlossen werden können.

Die Kühleinrichtung (32) hat in der bevorzugten Ausführungsförm zusätzlich einen geschlossenen Kühlkreislauf (34), der einen Zulauf (36) und einen Rücklauf (37) besitzt, die beide in Nachbarschaft zum vorgenannten Zulauf (35) am Gehäuse (13) angeordnet sind.

In Abwandlung der gezeigten Ausführungsform kann alternativ nur ein offener Kühlkreislauf (35) oder nur ein geschlossener Kühlkreislauf (34) vorhanden sein. Gegebenenfalls können auch mehrere solcher Kühlkreisläufe parallel angeordnet sein.

In der gezeigten Ausführungsform bestehen die Kühlkreisläufe (33, 34) aus Kühlleitungen (38), vorzugsweise Kühlrohren, die im Inneren des Gehäuses (13) der Basiseinheit (12) und des Gehäuses (10) des Schwenkarmes (9) verlegt sind. Die Kühleinrichtung (32) kühlt vornehmlich den Werkzeugantrieb (4) und die Stellantriebe (19, 20). Zu diesem Zweck sind die Kühlleitungen (38) derart geführt, dass sie den Werkzeugantrieb (4) und die Stellantriebe (19, 20) an mehreren Seiten umgeben und hierbei jeweils einen Kühlkäfig (39) bilden. Die Kühlkäfige (39) umschließen dabei vorzugsweise nicht nur die Motoren (5, 21), sondern auch die Getriebe (6, 22).

Die Zuläufe (35, 26) und der Rücklauf (37) sind vorzugsweise im Bereich der Drehachse (23) des Schwenkarms (9) angeordnet und sind mit ihren anschließenden Kühlleitungen-(38) durch das Lager (11) hindurchgeführt. Das Lager (11) hat hierfür einen entsprechend großen Durchmesser. Im Lagerbereich können die Kühlleitungen (38) mehrere Schleifen bilden, um in diesem Bereich eine zusätzliche Kühlwirkung zu bieten.

Wie Figur 8 verdeutlicht, werden die Kühlkäfige (39) von geraden und längs der Antriebe (4, 19, 20) laufenden Leitungsabschnitten und stirnseitigen Verbindungsabschnitten gebildet. Hierdurch befinden sich an den vier Längskanten der Antriebe (4, 19, 20) jeweils mindestens ein solcher Leitungsabschnitt. Teilweise sind an diesen Kantenbereichen auch mehrere parallel laufende Leitungsabschnitte vorhanden. Hierbei können sich die beiden Kühlkreisläufe (33, 34) ergänzen, wobei jeder Kühlkreislauf (33, 34) einen anderen Kühlabschnitt des Kühlkäfigs (39) bildet. Stellenweise können die Kühlkreisläufe (33, 34) aber auch parallel zueinander an der gleichen Käfigseite verlaufen. Hierdurch ist eine Verstärkung der Kühlkapazität an einem oder mehreren Bereichen der Antriebe (4, 19, 20) möglich. Die Kühlwirkung kann dadurch gezielt auf lokale Wärmeentwicklung und erhöhten Kühlbedarf ausgelegt werden. Durch die Bildung von Kühlkäfigen (39) bleibt außerdem die Zugänglichkeit der Antriebe (4, 19, 20) zu Wartungs- und Montagezwecken gewahrt.

Abwandlungen der gezeigten Ausführungsformen sind in verschiedener Weise möglich. Die Antriebseinheit (3) kann sich z.B. auf dem Werkzeugantrieb (4) und die Bewegungseinheit (8) beschränken, wobei die Führung (14) nicht mehr dazu gehört. Die Schnittstelle für die Montage und Demontage der Antriebseinheit (3) befindet sich dann an der Führung (14), wobei diese zum Gestell oder zum Grundaufbau der Bearbeitungsmaschine (1) gehört. Die Antriebseinheit (3) wird zur Montage dann mit der Basiseinheit (12) auf die Führung (14) aufgesetzt. Variabel ist auch die Verwendung und Anordnung der Kühleinrichtung (32). Bei geeigneter Gehäusedimensionierung und ausreichender Außenluftkühlung kann auf die fluidische Kühleinrichtung (32) verzichtet werden. Die Kühleinrichtung (32) kann ferner in die Gehäusewandung integriert sein. Variabel ist auch ihre Auslegung und Gestaltung. Statt stangenförmiger Kühlkäfige (39) können auch andere Formen der Kühleinrichtung (32), zum Beispiel Plattenkühler, eingesetzt werden.

### BEZUGSZEICHENLISTE

- 1: spanabhebende Bearbeitungsmaschine, Säge, Seilsäge
- 2: Werkzeug
- 3: Antriebseinheit, Antriebsmodul
- 4: Werkzeugantrieb, Drehantrieb
- 5: Antriebsmotor
- 6: Getriebe
- 7: Werkzeugaufnahme, Kupplung
- 8: Bewegungseinheit
- 9: Schwenkarm
- 10: Gehäuse
- 11: Lager
- 12: Basiseinheit, Fahreinheit
- 13: Gehäuse
- 14: Führung, Führungsschiene
- 15: Lagerbock
- 16: Aufnahme
- 17: Fixiereinrichtung, Klemmeinrichtung
- 18: Abtriebsmittel, Zahnstange
- 19: Stellantrieb
- 20: Stellantrieb
- 21: Stellmotor
- 22: Getriebe
- 23: Bewegungsachse, Drehachse
- 24: Bewegungsachse, Fahrachse
- 25: Maschinengestell
- 26: Sockel
- 27: Antriebsrolle
- 28: Sägeseil
- 29: Seilführung
- 30: Wand
- 31: Umlenkvorrichtung
- 32: Kühleinrichtung
- 33: offener Kühlkreislauf
- 34: geschlossener Kühlkreislauf
- 35: Zulauf offener Kühlkreislauf
- 36: Zulauf geschlossener Kühlkreislauf
- 37: Rücklauf geschlossener Kühlkreislauf
- 38: Kühlleitung
- 39: Kühlkäfig
- 40: Sägeblatt
- 41: Abtriebsachse, Werkzeugdrehachse

## Patentansprüche

1. Antriebseinheit für eine spanabhebende Bearbeitungsmaschine (1), insbesondere eine Säge-, Trenn- oder Schleifmaschine für die Bearbeitung von Beton, Stein, Holz oder Metall, wobei die Antriebseinheit (3) mit einem Werkzeug (2) verbindbar ist und einen Werkzeugantrieb (4) sowie eine Bewegungseinheit (8) mit einem abtriebseitigen Schwenkarm (9) und mit vorzugsweise ein oder mehreren weiteren Bewegungsachsen (23,24) aufweist, **dadurch gekennzeichnet, dass** der Werkzeugantrieb (4) im Schwenkarm (9) angeordnet und an einer ein- oder mehrachsig beweglichen Basiseinheit (12), vorzugsweise einer Fahreinheit, drehbar gelagert (11) ist, welche ein oder mehrere Stellantriebe (19,20) für die Bewegungen des Schwenkarms (9) und der Basiseinheit (12) aufweist, wobei der Werkzeugantrieb (4) und die Stellantriebe (19,20) elektrische Antriebsmotoren (5,21) mit Getrieben (6,22) besitzen.

2. Antriebseinheit nach Anspruch 1, **dadurch gekennzeichnet, dass** das Gehäuse (10) des Schwenkarms (9) eine integrierte Lagerung für den elektrischen Antriebsmotor (5) und ein hochuntersetzendes Getriebe (6) aufweist.

3. Antriebseinheit nach Anspruch 1 oder 2, **dadurch gekennzeichnet, dass** die Antriebseinheit (3) als austauschbares und für unterschiedliche Bearbeitungsmaschinen (1) einsetzbares Antriebsmodul ausgebildet ist.

4. Antriebseinheit nach Anspruch 1, 2 oder 3, **dadurch gekennzeichnet, dass** die Basiseinheit (12) auf einer Führung (14) beweglich gelagert und mit einer Fixiereinrichtung (17) arretierbar ist.

5. Antriebseinheit nach einem vorhergehenden Ansprüche, **dadurch gekennzeichnet, dass** die Führung (14) eine kurze Basislänge und mindestens einen Lagerbock (15) aufweist.

6. Antriebseinheit nach einem vorhergehenden Ansprüche, **dadurch gekennzeichnet, dass** der Lagerbock (15) eine Aufnahme (16) zur lösbaren Befestigung an einem Stützgestell aufweist.

7. Antriebseinheit nach einem vorhergehenden Ansprüche, **dadurch gekennzeichnet, dass** die Antriebseinheit eine integrierte fluidische Kühleinrichtung (32) aufweist.

8. Antriebseinheit nach einem vorhergehenden Ansprüche, **dadurch gekennzeichnet, dass** die Kühleinrichtung (32) einen offenen Kühlkreislauf (33) aufweist, der zum Werkzeug (2) geführt ist.

9. Antriebseinheit nach einem vorhergehenden Ansprüche, **dadurch gekennzeichnet, dass** die Kühleinrichtung (32) einen geschlossenen Kühlkreislauf (34) aufweist.

10. Antriebseinheit nach einem vorhergehenden Ansprüche, **dadurch gekennzeichnet, dass** die Kühlkreisläufe (33,34) mit ihren Kühlleitungen (38) den Werkzeugantrieb (4) und die Stellantriebe (19,20) an mehreren Seiten umgeben und Kühlkäfige (39) bilden.

11. Antriebseinheit nach einem vorhergehenden Ansprüche, **dadurch gekennzeichnet, dass** die Zuläufe (35,36) und de Ablauf (34) der Kühlleitungen (38) am Gehäuse (13) der Basiseinheit (12) angeschlossen sind, wobei die Kühlleitungen (38) durch das Lager (11) des Schwenkarms (9) geführt sind.

## Claims

1. Drive unit for a chip-forming processing machine (1), in particular a sawing, cutting-off or grinding machine for the processing of concrete, stone, wood or metal, the drive unit (3) being connectable to a tool (2) and having a tool drive (4) and a motion unit (8) with an output-side pivot arm (9) and with preferably one or more further motion axes (23, 24), **characterized in that** the tool drive (4) is arranged in the pivot arm (9) and is rotatably mounted (11) on a base unit (12), preferably a travel unit, which is movable along a single axis or multiple axes and has one or more actuators (19, 20) for the movements of the pivot arm (9) and the base unit (12), the tool drive (4) and the actuators (19, 20) having electric drive motors (5, 21) with gear units (6, 22).

2. Drive unit according to Claim 1, **characterized in that** the housing (10) of the pivot arm (9) has an integrated mounting for the electric drive motor (5) and a high-reduction gear unit (6).

3. Drive unit according to Claim 1 or 2, **characterized in that** the drive unit (3) is designed as an interchangeable drive module which can be used for different processing machines (1).

4. Drive unit according to Claim 1, 2 or 3, **characterized in that** the base unit (12) is movably mounted on a guide (14) and can be locked with a fixing device (17).

5. Drive unit according to one of the preceding claims, **characterized in that** the guide (14) has a short base length and at least one bearing block (15).

6. Drive unit according to one of the preceding claims, **characterized in that** the bearing block (15) has a receptacle (16) for the releasable fastening to a supporting frame.

7. Drive unit according to one of the preceding claims, **characterized in that** the drive unit has an integrated fluidic cooling device (32).

8. Drive unit according to one of the preceding claims, **characterized in that** the cooling device (32) has an open cooling circuit (33) which is directed to the tool (2).

9. Drive unit according to one of the preceding claims, **characterized in that** the cooling device (32) has a closed cooling circuit (34).

10. Drive unit according to one of the preceding claims, **characterized in that** the cooling circuits (33, 34), with their cooling lines (38), surround the tool drive (4) and the actuators (19, 20) on several sides and form cooling cages (39).

11. Drive unit according to one of the preceding claims, **characterized in that** the feeds (35, 36) and the discharge (34) of the cooling lines (38) are attached to the housing (13) of the base unit (12), the cooling lines (38) being passed through the bearing (11) of the pivot arm (9).

## Revendications

1. Unité d'entraînement pour une machine d'usinage à enlèvement de copeaux (1), notamment une machine à scier, couper ou meuler, pour l'usinage de béton, de pierre, de bois ou de métal, l'unité d'entraînement (3) pouvant être connectée à un outil (2) et présentant un entraînement d'outil (4) ainsi qu'une unité de déplacement (8) avec un bras pivotant (9) du côté de la sortie et avec de préférence un ou plusieurs axes de déplacement supplémentaires (23, 24), **caractérisée en ce que** l'entraînement d'outil (4) est disposé dans le bras pivotant (9) et est monté (11) de manière à pouvoir tourner sur une unité de base (12) déplaçable suivant un ou plusieurs axes, notamment une unité de conduite, qui présente un ou plusieurs entraînements de commande (19, 20) pour les déplacements du bras pivotant (9) et de l'unité de base (12), l'entraînement d'outil (4) et les entraînements de commande (19, 20) possédant des moteurs d'entraînement électriques (5, 21) avec des transmissions (6, 22).

2. Unité d'entraînement selon la revendication 1, **caractérisée en ce que** le boîtier (10) du bras pivotant (9) présente un support sur palier intégré pour le moteur d'entraînement électrique (5) et une transmission (6) à grande démultiplication.

3. Unité d'entraînement selon la revendication 1 ou 2, **caractérisée en ce que** l'unité d'entraînement (3) est réalisée sous forme de module d'entraînement remplaçable et pouvant être utilisé pour différentes machines d'usinage (1).

4. Unité d'entraînement selon la revendication 1, 2 ou 3, **caractérisée en ce que** l'unité de base (12) est montée mobile sur une coulisse (14) et peut être bloquée par un dispositif de fixation (17).

5. Unité d'entraînement selon l'une quelconque des revendications précédentes, **caractérisée en ce que** la coulisse (14) présente une longueur de base courte et au moins un coussinet (15).

6. Unité d'entraînement selon l'une quelconque des revendications précédentes, **caractérisée en ce que** le coussinet (15) présente un logement (16) pour la fixation desserrable sur un bâti support.

7. Unité d'entraînement selon l'une quelconque des revendications précédentes, **caractérisée en ce que** l'unité d'entraînement présente un dispositif de refroidissement fluidique intégré (32).

8. Unité d'entraînement selon l'une quelconque des revendications précédentes, **caractérisée en ce que** le dispositif de refroidissement (32) présente un circuit de refroidissement ouvert (33) qui est guidé vers l'outil (2).

9. Unité d'entraînement selon l'une quelconque des revendications précédentes, **caractérisée en ce que** le dispositif de refroidissement (32) présente un circuit de refroidissement fermé (34).

10. Unité d'entraînement selon l'une quelconque des revendications précédentes, **caractérisée en ce que** les circuits de refroidissement (33, 34) avec leurs conduites de refroidissement (38) entourent l'entraînement d'outil (4) et les entraînements de commande (19, 20) sur plusieurs côtés et forment des cages de refroidissement (39).

11. Unité d'entraînement selon l'une quelconque des revendications précédentes, **caractérisée en ce que** les entrées (35, 36) et la sortie (34) des conduites de refroidissement (38) sont raccordées au boîtier (13) de l'unité de base (12), les conduites de refroidissement (38) étant guidées à travers le palier (11) du bras pivotant (9).
